# EUROPÄISCHE PATENTSCHRIFT

(11) **EP 2 619 022 B1**
(45) Veröffentlichungstag und Bekanntmachung des Hinweises auf die Patenterteilung: **06.04.2016**
(21) Anmeldenummer: 11754369.4
(22) Anmeldetag: 06.09.2011
(51) Int. Cl.: B60H 1/00, F24F 13/04

(54) **MISCHELEMENT UND MISCHMODUL FÜR ZWEI SICH IN EINEM KLIMAGERÄT KREUZENDE LUFTSTRÖME**
MIXING ELEMENT AND MIXING MODULE FOR TWO AIR FLOWS INTERSECTING IN AN AIR CONDITIONER
ÉLÉMENT MÉLANGEUR ET MODULE MÉLANGEUR DE DEUX FLUX D'AIR SE CROISANT DANS UN APPAREIL DE CLIMATISATION

(30) Priorität: 23.09.2010 DE 102010041282
(43) Veröffentlichungstag der Anmeldung: 31.07.2013
(73) Patentinhaber: MAHLE Behr GmbH & Co. KG, 70469 Stuttgart (DE)
(72) Erfinder: VENEZIA, Vincenzo, 71093 Weil im Schönbuch (DE)
(74) Vertreter: Grauel, Andreas
(86) Internationale Anmeldenummer: PCT/EP2011/065349
(87) Internationale Veröffentlichungsnummer: WO 2012/038246

(56) Entgegenhaltungen:
- EP-A1- 0 749 857
- EP-A2- 1 445 133
- FR-A1- 2 889 486

## Beschreibung

Die vorliegende Erfindung bezieht sich auf ein Klimagerät für zwei sich in dem Klimagerät kreuzende Luftströme, das in einem Fahrzeug eingesetzt werden kann, wie z.B. in FR 2 889 486 A1.

Bei der Entwicklung moderner Klimageräte bzw. Klimaanlagen, insbesondere solchen, die in Fahrzeugen Anwendung finden, stellt sich das Problem, dass immer weniger Bauraum im Fahrzeug für die Klimaanlage (HVAC, Heating, Ventilating, and Air Conditioning; engl. Heizung, Lüftung und Luftkonditionierung) zur Verfügung gestellt wird und gleichzeitig die Anforderungen an die Temperaturregelung/Temperaturschichtung steigen. Um diese Aufgaben zu bewerkstelligen, wird Mischraum bzw. Bauraum im HVAC benötigt, in dem sich kalte und warme Luft vermischen können. Die Temperaturregelung/Schichtung wird in vielen bekannten HVAC mit Hilfe von Luftleitteilen und/oder Kalt- und Warmkanälen erreicht.

Es ist die Aufgabe der vorliegenden Erfindung, ein verbessertes Klimagerät zu schaffen.

Diese Aufgabe wird durch ein Klimagerät gemäß den unabhängigen und nebengeordneten Ansprüchen gelöst.

Der vorliegenden Erfindung liegt die Erkenntnis zugrunde, dass sich zwei Luftströme mit unterschiedlichen Temperaturen in kleinem Bauraum optimal durchmischen lassen, wenn ein Mischmodul mit H-förmigem Schnittprofil bzw. ein H-Mischmodul eingesetzt wird. Das Mischmodul umfasst zumindest ein Mischelement zur Verbesserung der Luftdurchmischung in Klimageräten und ist geeignet für zwei Luftströme, die nicht parallel zueinander strömen. Das Mischelement ist mit 2 quasi-parallelen Wänden gebildet, die in der Mitte durch eine Wand verbunden sind, die normal zu beiden Wänden und parallel zu den sich kreuzenden Luftströmungen angeordnet ist. Eine Kontaktfläche zwischen kalter und warmer Luft wird durch derartige Mischelemente um ein vielfaches vergrößert, wodurch die Durchmischung deutlich beschleunigt wird, Das Mischmodul kann z. B. nach dem Heizkörper im Klimagerät eingebaut sein. Gleichzeitig dienen die Mischelemente als Kanäle, um Luft mit einer bestimmten Temperatur ungestört zu führen.

Vorteilhafterweise können durch Verwenden des erfindungsgemäßen Mischmoduls die für Temperaturregelung und Schichtung notwendigen Leitteile und Kanäle im Klimagerät vermieden werden, sodass es nicht zu hohen Druckverlusten und verringerter Leistung bzw. förderbarer Luftmenge einer Klimaanlage kommt. Es wird dadurch auch weniger Bauraum im Fahrzeug für die Klimaanlage benötigt. Die oben genannten Einbauten in Form des Mischmoduls wirken sich hinsichtlich der Akustik positiv aus, sodass Störgeräusche minimiert werden können. Es entfällt die Optimierung von oben genannten Leitteilen, wodurch Entwicklungsaufwand eingespart werden kann, insbesondere im Versuch und der Berechnung. Somit ist eine komplexe Regelung der Anlage ohne hohen Entwicklungsaufwand möglich. Die Entwicklungskosten werden drastisch reduziert. Ferner kann die Temperatursträhnigkeit der Luft an den Kanalauslässen in die Fahrzeugkabine dank des Mischraumes vorteilhaft gelöst werden. Dadurch wird der Komfort für den Passagier positiv beeinflusst, da keine Temperatursträhnigkeit an den Kanalauslässen vorliegt.

Die vorliegende Erfindung schafft ein Klimagerät mit einem Mischmodul mit mindestens zwei Mischelementen für zwei sich in einem Klimagerät kreuzende Luftströme, wobei jedes Mischelement folgende Merkmale aufweist:
eine Hauptwand eines Mischbereichs zum Mischen eines ersten Luftstroms und eines, sich mit dem ersten Luftstrom kreuzenden, zweiten Luftstroms, wobei die Hauptwand so angeordnet ist, dass in Betrieb des Mischelements eine Einströmrichtung des ersten Luftstroms in den Mischbereich und eine Einströmrichtung des zweiten Luftstroms in den Mischbereich längs bezüglich einer Haupterstreckungsebene der Hauptwand verlaufen; und
eine erste und eine zweite Nebenwand des Mischbereichs, die jeweils mit einer Hauptoberfläche an gegenüberliegenden Seitenkanten der Hauptwand angebracht sind, wobei die erste und die zweite Nebenwand so angeordnet sind, dass in Betrieb des Mischelements die Einströmrichtung des ersten Luftstroms in den Mischbereich an einer Seitenkante der ersten Nebenwand vorbei und quer zu der Hautoberfläche der ersten Nebenwand verläuft, die Einströmrichtung des zweiten Luftstroms in den Mischbereich längs bezüglich der Hauptoberfläche der ersten Nebenwand verläuft, und eine Ausströmrichtung eines aus dem ersten und dem zweiten Luftstrom gemischten Luftstroms aus dem Mischbereich an einer Seitenkante der zweiten Nebenwand vorbei und quer zu der Hauptoberfläche der zweiten Nebenwand verläuft.

Unter einem Klimagerät kann hierbei eine Klimaanlage bzw. eine Anlage zur Heizung. Lüftung und Luftkonditionierung (HVAC, engl. Heating, Ventilating, and Air Conditioning) verstanden werden, wie sie beispielsweise in einem Fahrzeug zum Einsatz kommt. In einem derartigen Klimagerät können Luftströme unterschiedlicher Temperaturen erzeugt und geführt werden. Hier sind dies ein erster und ein zweiter Luftstrom. Die Luftströme können so geführt werden, dass sie sich an einer Stelle in dem Klimagerät kreuzen. An dieser Kreuzungsstelle, die einen Mischbereich der Luftströme darstellt, ist das Mischelement angeordnet. Das Mischelement umfasst die Hauptwand und die beiden Nebenwände. Ein Schnittprofil durch die Hauptwand und die Nebenwände des Mischelements kann im Wesentlichen H-förmig sein. Die Einströmrichtungen der beiden Luftströme in Betrieb des Mischelements spannen die Haupterstreckungsebene der Hauptwand auf. Dabei können die Einströmrichtungen durch entsprechend angeordnete und ausgeformte Eintrittsöffnungen oder Führungskanäle für die Luftströme vorgegeben sein. Eine Form des Mischelements kann an eine Geometrie des Raums angepasst sein, in dem das Mischelement zur Verbauung vorgesehen ist. Insbesondere gilt dies für die Seitenkanten der Hauptwand, an denen keine Nebenwände angebracht sind, sowie für die gesamte Dimensionierung des Mischelements. Kanten der Hauptwand und der Nebenwände können einen geraden, gekrümmten oder eine Mischung aus einem geraden und gekrümmten Verlauf aufweisen, beispielsweise einen stufenund/oder bogenförmigen Verlauf.

Hierbei kann die Hauptwand des Mischbereichs auf beiden Seiten ihrer Haupterstreckungsebene von dem ersten und dem zweiten Luftstrom umströmbar sein. Die Hauptwand ist somit in dem Mischbereich angeordnet. Beide ihrer Hauptoberflächen können von den beiden Luftströmen berührt werden. Dies bietet den Vorteil, dass die Vermischung des ersten und des zweiten Luftstroms effizienter erfolgen kann, da auf beiden Seiten der Hauptwand der Mischbereich zur Verfügung steht.

Ferner können eine Seitenkante der ersten Nebenwand und eine Seitenkante der zweiten Nebenwand einen Überstand über die Haupterstreckungsebene der Hauptwand aufweisen. Der Überstand über die Haupterstreckungsebene der Hauptwand kann bei der ersten und der zweiten Nebenwand den gleichen Betrag aufweisen. Der Überstand kann von beiden Hauptoberflächen der Hauptwand aus betrachtet vorliegen. Durch den Überstand stehen Seitenkanten der Nebenwände über jeweilige Hauptoberflächen der Hauptwand vor. Dies bietet den Vorteil, dass die Durchmischung der beiden Luftströme weiter verbessert wird. So können durch die von den Hauptoberflächen der Hauptwand vorstehenden Nebenwände Luftverwirbelungen entstehen, die eine Vermischung der Luftströme begünstigen.

Gemäß einer Ausführungsform können sich die erste und die zweite Nebenwand jeweils über mindestens eine halbe Länge der Seitenkante der Hauptwand erstrecken, an der sie angebracht sind. Mindestens die halbe Länge kann hier insbesondere annähernd die ganze Länge bedeuten. Dies bietet den Vorteil, dass die Vermischung der Luftströme über die gesamte Höhe des Mischbereichs durch die von den Nebenwänden bewirkten Verwirbelungen unterstützt wird und somit effizienter wird.

So kann eine Breite einer der Nebenwände höchstens ein Fünftel eines Abstands zwischen der ersten und der zweiten Nebenwand betragen. Diese Bedingung kann für beide Nebenwände gelten. Bei der Breite einer der Nebenwände handelt es sich um den Abstand zwischen den beiden Seitenkanten der Nebenwand, an denen der erste Luftstrom vorbeiströmt. Dies bietet den Vorteil, dass sich bei diesem Abmessungsverhältnis eine sehr gute Durchmischung und Verwirbelung der Luftströme ergibt.

In dem Mischmodul werden erfindungsgemäße Mischelemente vorteilhaft eingesetzt.

Hierbei können die Hauptwände der mindestens zwei Mischelemente einander gegenüberliegend und voneinander beabstandet angeordnet sein, wobei die Haupterstreckungsebenen der Hauptwände eine gemeinsame Ausrichtung aufweisen können. Die Haupterstreckungsebenen der Hauptwände der mindestens zwei Mischelemente können hierbei im Wesentlichen bzw. annähernd parallel zueinander verlaufen. So kann die Anordnung eines der mindestens zwei Mischelemente bezüglich eines anderen der mindestens zwei Mischelemente durch eine Verschiebung des einen zu dem anderen Mischelement in eine Richtung beschrieben sein, die annähernd orthogonal zu den Haupterstreckungsebenen ihrer Hauptwände ist. Dies bietet den Vorteil, dass durch diese Anordnung der mindestens zwei Mischelemente eine Durchmischung der zwei Luftströme weiter optimiert wird.

Ferner kann ein Abstand zwischen gegenüberliegenden Seitenkanten der Nebenwände benachbarter Mischelemente der mindestens zwei Mischelemente höchstens das Fünffache einer Breite einer Nebenwand betragen. Durch diese Bedingung an das Größenverhältnis kann die Vermischung der zwei Luftströme noch weiter verbessert werden.

Die vorliegende Erfindung schafft ferner ein Klimagerät, das folgende Merkmale aufweist:
einen Vermischungsraum für zwei sich in dem Vermischungsraum kreuzende Luftströme;
einen ersten Eintrittskanal für einen ersten Luftstrom, der an einer ersten Seite in den Vermischungsraum einmündend angeordnet ist;
einen zweiten Eintrittskanal für einen zweiten Luftstrom, der an einer an die erste Seite angrenzenden Bodenseite in den Vermischungsraum einmündend angeordnet ist;
einen Austrittskanal für einen gemischten Luftstrom, der an einer zweiten Seite gegenüber der ersten Seite aus dem Vermischungsraum austretend angeordnet ist; und
ein erfindungsgemäßes Mischmodul, das in dem Vermischungsraum angeordnet ist, wobei in dem Mischmodul der erste und der zweite Luftstrom von den Eintrittskanälen mischbar sind und der gemischte Luftstrom in den Austrittskanal ausgebbar ist.

Bei dem Vermischungsraum kann es sich um den Bauraum in dem Klimagerät handeln, in dem das Mischmodul einbaubar ist. Die Form des Vermischungsraums kann von den baulichen Gegebenheiten des Klimageräts vorgegeben sein. Der erste und der zweite Eintrittskanal sowie der Austrittskanal sind an unterschiedlichen Seiten des Vermischungsraums angeordnet. Die Seite des ersten Eintrittskanals und die gegenüberliegende Seite des Austrittskanals können beide an die Bodenseite mit dem zweiten Eintrittskanal angrenzen.

Hierbei kann der Abstand zwischen gegenüberliegenden Seitenkanten der Nebenwände der zwei Mischelemente des Mischmoduls höchstens ein Drittel einer Abmessung des Vermischungsraums in der Richtung dieses Abstands betragen. Dies bietet den Vorteil, dass durch diese Bedingung an das Größenverhältnis die Vermischung der zwei Luftströme optimiert werden kann.

Vorteilhafte Ausfüllrungsbeispiele der vorliegenden Erfindung werden nachfolgend Bezug nehmend auf die beiliegenden Zeichnungen näher erläutert. Es zeigen:
- Fig. 1: eine isometrische Ansicht eines Mischmoduls mit zwei Mischelementen. gemäß einem Ausführungsbeispiel der vorliegenden Erfindung;
- Fig. 2: eine Seitenansicht eines der Mischelemente des Mischmoduls aus Fig. 1;
- Fig. 3: eine Draufsicht des Mischmoduls aus Fig. 1; und
- Fig. 4: eine Vorderansicht des Mischmoduls aus Fig. 1.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

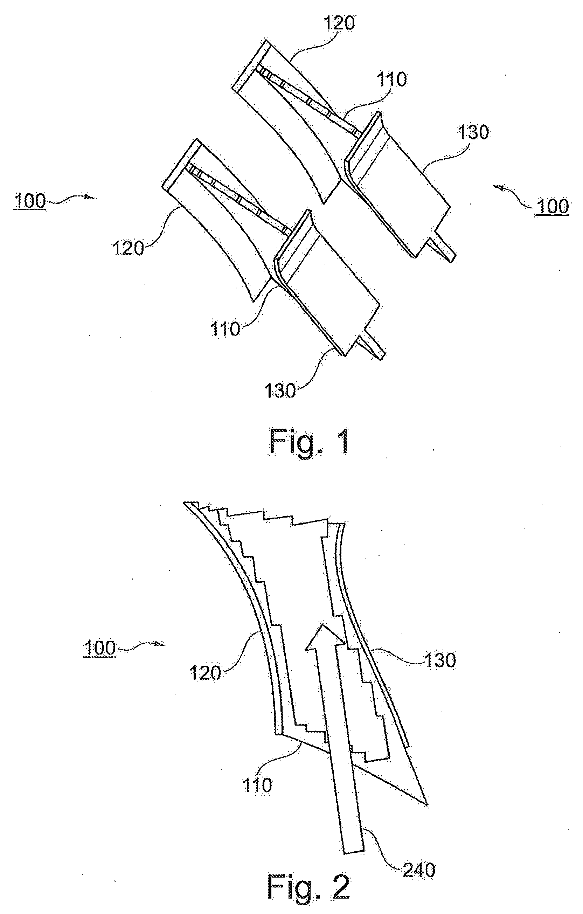

Fig. 1 zeigt eine isometrische Ansicht eines Mischmoduls mit zwei Mischelementen 100, gemäß einem Ausführungsbeispiel der vorliegenden Erfindung. Jedes der Mischelemente 100 weist eine Hauptwand 110, eine erste Nebenwand 120 und eine zweite Nebenwand 130 auf. Die Nebenwände 120, 130 sind an der Hauptwand 110 angebracht. Die beiden Mischelemente 100 sind in Aufbau und Form identisch, so dass im Hinblick darauf nur eines der beiden Mischelemente 100 genauer beschrieben wird.

Die Hauptwand 110 des Mischelements 100 ist ein plattenförmiger Körper. Die Hauptwand 110 weist somit zwei Hauptoberflächen auf. Ein Grundriss der Hauptwand 110 ist von asymmetrischer Form. In Fig. 1 ist eine obere Kante der Hauptwand 110 mit einem stufenförmigen Verlauf gezeigt. Genauer gesagt weist die obere Kante der Hauptwand 110 einem stufenförmigen Verlauf auf, der von der Seite der ersten Nebenwand 120 zu der Seite der zweiten Nebenwand 130 hin mehrere absteigende Stufen umfasst. Ferner sind eine linke und eine rechte Seitenkante der Hauptwand 110 sowie eine untere Kante der Hauptwand 110 in Fig. 1 mit einem konkav gekrümmten Verlauf dargestellt. Die Hauptwand 110 erstreckt sich entlang einer Haupterstreckungsebene zwischen der ersten Nebenwand 120 und der zweiten Nebenwand 130.

Die erste Nebenwand 120 ist in Fig. 1 an der linken Seitenkante der Hauptwand 110 angebracht dargestellt. Der Grundriss der ersten Nebenwand 120 ist rechteckig, wobei eine Länge einer Langseite einer mehrfachen Länge einer Schmalseite entspricht. Anders ausgedrückt entspricht der Grundriss der ersten Nebenwand 120 einem länglichen Rechteck, Im Verlauf ihrer Längsrichtung entlang einer Langseite ist die erste Nebenwand 120 gekrümmt bzw. gebogen. Die Krümmung folgt der Krümmung der Seitenkante der Hauptwand 110, an der die erste Nebenwand 120 angebracht ist. Die erste Nebenwand 120 ist so ein der angrenzenden Seitenkante der Hauptwand 110 angebracht, dass die gesamte Seitenkante von der ersten Nebenwand 120 bedeckt ist. In Fig. 1 ist die erste Nebenwand 120 entlang ihrer Längsrichtung durchgehend gekrümmt. Eine Haupterstreckungsebene der ersten Nebenwand 120 liegt in einem Winkel zu der Haupterstreckungsebene der Hauptwand 110. Genauer gesagt handelt es sich hierbei um einen rechten Winkel. Eine Breite der ersten Nebenwand 120 entlang einer Schmalseite ist so bemessen, dass die erste Nebenwand 120 über beide Hauptobeiflächen der Hauptwand 110 vorsteht, In Fig. 1 entspricht der Betrag, um den die erste Nebenwand 120 über jede der beiden Hauptoberflächen der Hauptwand 110 übersteht, in etwa der vierfachen Dicke der Hauptwand 110.

Die zweite Nebenwand 130 weist in Fig. 1 in etwa den gleichen Grundriss, die glelche Ausrichtung bezüglich der Hauptwand 110 und die gleiche Dimensionierung wie die erste Nebenwand 120 auf. Daher wird an dieser Stelle nur auf Unterschiede der zweiten Nebenwand 130 in Bezug auf die erste Nebenwand 120 eingefangen. Die zweite Nebenwand 130 unterscheidet sich von der ersten Nebenwand 120 in Fig. 1 allerdings in ihrer Krümmung entlang ihrer Längsrichtung. Die Krümmung entlang der Längsrichtung der zweiten Nebenwand 130 ist an die Krümmung der Seitenkante der Hauptwand 110 angepasst, an der die zweite Nebenwand 130 angebracht ist. In Fig. 1 ist angedeutet, dass die zweite Nebenwand 130 entlang ihrer Längsrichtung nicht durchgehend gekrümmt bzw. gebogen ist. Es ist erkennbar, dass die Krümmung der zweiten Nebenwand 130 hauptsächlich in einem oberen Abschnitt derselben vorliegt. Ein Verlauf der zweiten Nebenwand 130 in einem unteren Abschnitt derselben ist annähernd gerade. Die zweite Nebenwand 130 erstreckt sich von einem oberen Ende der angrenzenden Seitenkante der Hauptwand 110 nicht ganz bis zu dem unteren Ende der Seitenkante. Es bleibt ein Abschnitt der an die zweite Nebenwand 130 angrenzenden Seitenkante freiliegend. Eine Länge dieses freiliegenden Abschnitts entspricht in etwa der Breite einer der Nebenwände 120, 130,

Die zwei Mischelemente 100, die das Mischmodul aufweist, sind relativ zueinander so angeordnet, dass sich Hauptoberflächen der Hauptwände 110 der Mischelemente 100 gegenüberliegen. Die Mischelemente 100 sind entlang einer Richtung voneinander beabstandet, die orthogonal zu den Haupterstreckungsebenen der Hauptwände 110 der Mischelement 100 verläuft. In Fig. 1 beträgt der Abstand zwischen jeweils gegenüberliegenden Seitenkanten der Nebenwände 120, 130 in etwa eine Breite einer der Nebenwände 120, 130.

Die Formen, Abmessungen und Anordnungen von Elementen, die in diesem Ausführungsbeispiel beschrieben sind, sind lediglich exemplarisch und es können weitere Ausführungsbeispiele davon abweichende Formen, Abmessungen und Anordnungen von Elementen aufweisen, je nach der Geometrie des Bauraums, in dem das Mischmodul zu verbauen ist.

Fig. 2 zeigt eine Seitenansicht eines der Mischelemente 100 des Mischmoduls aus Fig. 1. Hierbei ist in Fig. 2 die Hauptwand 110 zwischen der ersten Nebenwand 120 und zweiten Nebenwand 130 dargestellt. Zusätzlich ist in Fig. 2 durch einen Pfeil 240 ein Luftstrom mit einer Strömungsrichtung angedeutet, die in der Zeichenebene von Fig. 2 von einer unteren Kante der Hauptwand 110 entlang einer Haupterstreckungsrichtung der Hauptwand 110 zu der oberen Kante der Hauptwand 110 verläuft. Bei dem Luftstrom 240 handelt es sich um einen Luftstrom mit einer Temperatur Tᵤ. Die erste Nebenwand 120 ist in Fig. 2 links gezeigt und die zweite Nebenwand 130 ist rechts dargestellt. Von der Hauptwand 110 ist in Fig. 2 eine der Hauptoberflächen sichtbar. Aus Fig. 2 ist ferner der Verlauf aller Kanten der Hauptwand 110 ersichtlich. In der Seitenansicht von Fig. 2 sind die erste Nebenwand 120 und die zweite Nebenwand 130, die annähernd in rechten Winkeln zu der Hauptwand 110 an dieser angebracht sind, somit im Profil bzw. mit Blick auf jeweils eine Seitenkante derselben gezeigt.

Folglich ist die jeweilige Krümmung der beiden Hauptwände 120,130 erkennbar.

Die Hauptwand 110 weist vier Umfangskanten auf, einen Umriss der Hauptwand 110 darstellen. Die obere Kante der Hauptwand 110 weist den stufenförmigen Verlauf auf, wobei die Stufen unterschiedliche Höhen und Längen aufweisen. In Fig. 2 sind beispielsweise sechs derartige Stufen gezeigt. Die untere Kante der Hauptwand 110 weist einen leicht gekrümmten Verlauf auf. Auf der Seite der zweiten Nebenwand 130 bildet die untere Kante der Hauptwand 110 mit der angrenzenden Seitenkante einen spitzen Winkel. Die Seitenkanten der Hauptwand 110 sind zumindest teilweise gekrümmt. Die in Fig. 1 links dargestellte Seitenkante der Hauptwand 110 ist im Wesentlichen über ihren gesamten Verlauf hinweg gekrümmt bzw. gebogen. Die in Fig. 1 rechts gezeigte Seitenkante der Hauptwand 110 weist in ihrem oberen Bereich, genauer gesagt in ihrem oberen Viertel, eine Krümmung auf und weist in ihrem restlichen Bereich im Wesentlichen keine Krümmung auf. Eine Länge der links dargestellten Seitenkante, an der die erste Nebenwand 120 angebracht ist, ist etwas geringer als eine Länge der rechts dargestellten Seitenkante, an der die zweite Nebenwand 130 angebracht ist.

Die erste und die zweite Nebenwand 120, 130 sind den jeweils angrenzenden Seitenkanten der Hauptwand 110 entsprechend im Längsprofil gebogen bzw. gekrümmt. Das Längsprofil der ersten Nebenwand 120 folgt dem Verlauf der angrenzenden, in Fig. 2 links gezeigten, Seitenkante der Hauptwand 110, Somit ist die erste Nebenwand 120 im Längsprofil durchgehend gekrümmt. Das Längsprofil der zweiten Nebenwand 130 folgt dem Verlauf der angrenzenden, in Fig. 2 rechts gezeigten, Seitenkante der Hauptwand 110. Somit ist die zweite Nebenwand 130 in einem oberen Bereich gekrümmt und verläuft in einem unteren Bereich im Wesentlichen gerade. Die zweite Nebenwand 130 erstreckt sich von dem oberen Ende der angrenzenden Seitenkante der Hauptwand 110 nicht ganz bis zu dem unteren Ende derselben.

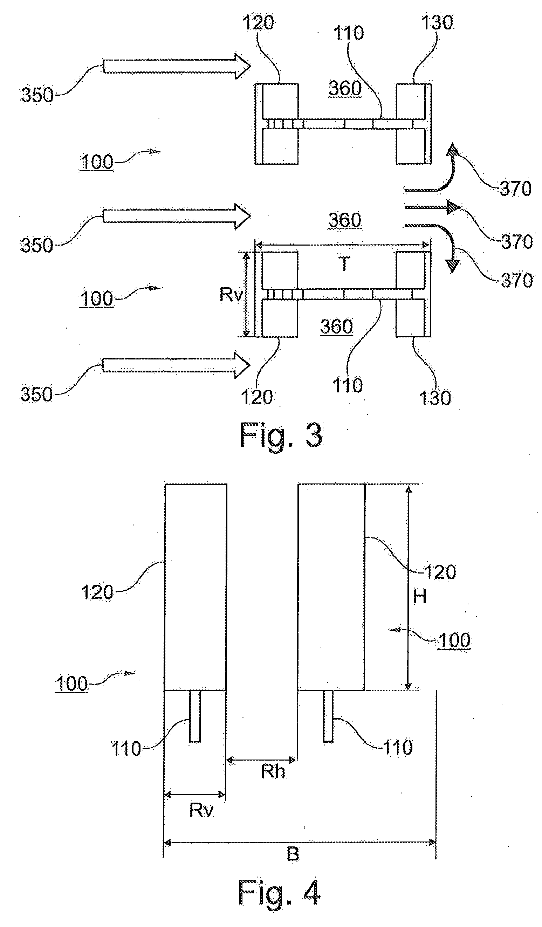

Fig. 3 zeigt eine Draufsicht des Mischmoduls aus Fig. 1. In der Draufsicht in Fig. 3 sind zusätzlich zu den zwei Mischelementen 100 ein durch drei Pfeile angedeuteter Luftstrom 350, ein Mischbereich 360, ein durch drei weitere Pfeile angedeuteter, gemischter Luftstrom 370, eine Nebenwandbreite Rv und ein Abstand T der ersten Nebenwand 120 zu der zweiten Nebenwand 130 gezeigt. Aus der Draufsicht von Fig. 3 erschließt sich ein H-förmiger Grundriss jedes Mischelements 100 im Profil, das jeweils durch die erste Nebenwand 120, die Hauptwand 110 und die zweite Nebenwand 130 gebildet ist.

Der Luftstrom 350, der in Fig. 3 vom linken Rand der Zeichnung aus in der Zeichenebene nach rechts strömt, trifft zunächst auf die ersten Nebenwände 120 der beiden Mischelemente 100. Der Luftstrom 350 strömt dann an den ersten Seitenwänden 120 an ihren Seitenkanten vorbei und tritt in den Mischbereich 360 ein, Der Luftstrom 350 weist eine Temperatur Tₒ auf.

In den Mischbereich 360 tritt ebenfalls der Luftstrom 240 mit der Temperatur Tᵤ ein. Der Luftstrom 240 ist in Fig. 3 zwar nicht dargestellt, aber er würde in dieser Darstellung im Mischbereich 360 aus der Zeichenebene heraus in Richtung eines Betrachters von Fig. 3 strömen. Somit mischen sich in dem Mischbereich 360 der Luftstrom 240 mit der Temperatur Tᵤ und der Luftstrom 350 mit der Temperatur Tₒ. Der Mischbereich 360 beginnt, in Strömungsrichtung des Luftstroms 350 gesehen, an jenen Hauptoberflächen der ersten Nebenwände 120, die den jeweiligen zweiten Nebenwände 130 zugewandt sind. Der Mischbereich 360 reicht bis zu den zweiten Nebenwänden 130, genauer gesagt bis zu jenen Hauptoberflächen der zweiten Nebenwände 130, die den ersten Nebenwänden 120 zugewandt sind, oder auch über die zweiten Nebenwände 130 hinaus nach rechts in Fig. 3. Der Mischbereich 360 erstreckt sich in Fig. 3 auch zwischen den Mischelementen 100, sowie oberhalb und unterhalb derselben. Die genauen Grenzen des Mischbereichs 360 hängen auch von der Geometrie des Raumes ab, in dem das Mischmodul verbaut ist.

Der gemischte Luftstrom 370, der aus dem Luftstrom 240 und dem Luftstrom 350 gemischt ist, tritt im Bereich der zweiten Nebenwände 130 der Mischelemente 100 aus dem Mischbereich 360 aus. Der gemischte Luftstrom 370 verläuft zunächst entlang der gleichen Richtung wie der Luftstrom 350. Abhängig von der Geometrie des Raumes, in dem das Mischmodul verbaut ist, kann der gemischte Luftstrom 370 nach Verlassen des Mischbereichs 360 auch seine Richtung ändern. Beispielsweise kann der gemischte Luftstrom 370 sich nach Verlassen des Mischbereichs 360 aufteilen, wie es in Fig. 3 dargestellt ist.

Die Nebenwandbreite Rv und der Abstand T der ersten Nebenwand 120 zu der zweiten Nebenwand 130 sind in Fig. 3 exemplarisch für das untere Mischelement 100 eingezeichnet, aber gelten selbstverständlich auch für das obere Mischelement 100 in Fig. 3. Die Nebenwandbreite Rv entspricht einer Erstreckung einer Schmalseitenkante einer ersten Nebenwand 120 eines Mischelements 100. Der Abstand T der ersten Nebenwand 120 zu der zweiten Nebenwand 130 wird zwischen jenen Hauptoberflächen der ersten und der zweiten Nebenwand 120, 130 gemessen, die voneinander abgewandt sind. Für ein Verhältnis der Nebenwandbreite Rv zu dem Abstand T gilt generell Rv/T ≥ 0,2 für ein gutes Mischergebnis im Mischbereich 360. In Fig. 3 beträgt das Verhältnis bei beiden Mischelementen 100 in etwa 0,5 und die beiden Mischelemente 100 weisen im Wesentlichen die gleichen Abmessungen und Größenverhältnisse auf.

Fig. 4 zeigt eine Vorderansicht des Mischmoduls aus Fig. 1. Die Ansicht in Fig. 4 auf die Mischelemente 100 des Mischmoduls erfolgt entlang der Strömungsrichtung des Luftstroms 350 in Fig. 3. Somit sind von den Mischelementen 100 die dem Luftstrom 350 zugewandten Hauptoberflächen der ersten Nebenwände 120 sowie untere Abschnitte der Schmalseiten der Hauptwände 110 in der Darstellung sichtbar. Die beiden Mischelemente 100 weisen im Wesentlichen die gleichen Abmessungen und Größenverhältnisse auf. In der Vorderansicht von Fig. 4 sind an den zwei dargestellten Mischelementen 100 weitere Abmessungen und Größenverhältnisse veranschaulicht.

So sind in Fig. 4 ein Abstand Rh zwischen gegenüberliegenden Seitenkanten der ersten Nebenwände 120 der zwei Mischelemente 100, eine Breite B eines gesamten luftführenden Kanals in dem Raum, in dem das Mischmodul verbaut ist, und eine Höhe H der ersten Nebenwände 120 der Mischelemente dargestellt. Die Höhe H der ersten Nebenwände 120 der Mischelemente 100 kann auch der Höhe der zweiten Nebenwände 130 entsprechen. Die Höhe H entspricht der Erstreckung einer Langseitenkante einer ersten Nebenwand 120. Die Breite B ist in Fig. 4 beliebig gewählt, da der gesamte Luft führende Kanal nicht dargestellt ist. Der Abstand Rh muss nicht nur für die gegenüberliegenden Seitenkanten der ersten Nebenwände 120 gelten, sondern kann auch für die gegenüberliegenden Seitenkanten der zweiten Nebenwände 130 gelten, obwohl dieselben in Fig. 4 nicht dargestellt sind. Ferner ist in Fig. 4 erneut die Nebenwandbreite Rv eingezeichnet.

Für ein optimales Mischergebnis der beiden Luftströme gelten folgende Größenverhältnisse im Mischmodul. So gelte für die Beziehung zwischen der Breite B des gesamten Luft führenden Kanals und dem Abstand Rh im Allgemeinen das Verhältnis B/Rh ≥ 3. In Fig. 4 beträgt dieses Verhältnis in etwa 4. Die Nebenwandbreite Rv verhalte sich zu dem Abstand Rh hierbei generell gemäß Rv/Rh ≥ 0,2. In Fig. 4 beträgt dieses Verhältnis ungefähr 1. Ferner entspricht in Fig. 4 bei beiden Mischelement 100 die Höhe H näherungsweise der vierfachen Nebenwandbreite Rv.

Die beschriebenen Ausführungsbeispiele sind nur beispielhaft gewählt und können miteinander kombiniert werden. Auch können Ausführungsbeispiele der vorliegenden Erfindung nur Teile der in den Figuren gezeigten Elemente aufweisen.

## Patentansprüche

1. Klimagerät, das folgende Merkmale aufweist:
einen Vermischungsraum für zwei sich in dem Vermischungsraum kreuzende Luftströme (240, 350);
einen ersten Eintrittskanal für einen ersteh Luftstrom (350), der an einer ersten Seite in den Vermischungsraum einmündend angeordnet ist;
einen zweiten Eintrittskanal für einen zweiten Luftstrom (240), der an einer an die erste Seite angrenzenden Bodenseite in den Vermischungsraum einmündend angeordnet ist;
einen Austrittskanal für einen gemischten Luftstrom (370), der an einer zweiten Seite gegenüber der ersten Seite aus dem Vermischungsraum austretend angeordnet ist; und
ein Mischmodul für zwei sich in einem Klimagerät kreuzende Luftströme (240, 350) vorgesehen ist, wobei das Mischmodul mindestens zwei Mischelemente (100) aufweist, wobei das Mischmodul in dem Vermischungsraum angeordnet ist, wobei in dem Mischmoduls der erste und
der zweite Luftstrom (240, 350) von den Eintrittskanälen mischbar sind und der gemischte Luftstrom (370) in den Austrittskanal ausgebbar ist, wobei ein Mischelement (100) für zwei sich in einem Klimagerät kreuzende Luftströme ausgebildet ist, wobei das Mischelement (100) folgende Merkmale aufweist:
eine Hauptwand (110) eines Mischbereichs (360) zum Mischen eines ersten Luftstroms (350) und eines, sich mit dem ersten Luftstrom (350) kreuzenden, zweiten Luftstroms (240), wobei die Hauptwand (110) so angeordnet ist, dass in Betrieb des Mischelements (100) eine Einströmrichtung des ersten Luftstroms (350) in den Mischbereich (360) und eine Einströmrichtung des zweiten Luftstroms (240) in den Mischbereich (360) längs bezüglich einer Haupterstreckungsebene der Hauptwand (110) verlaufen; und
eine erste und eine zweite Nebenwand (120, 130) des Mischbereichs (360), die jeweils mit einer Hauptoberfläche an gegenüberliegenden Seitenkanten der Hauptwand (110) angebracht sind, wobei die erste und die zweite Nebenwand (120, 130) so angeordnet sind, dass in Betrieb des Mischelements (100) die Einströmrichtung des ersten Luftstroms (350) in den Mischbereich (360) an einer Seitenkante der ersten Nebenwand (120) vorbei und quer zu der Hauptoberfläche der ersten Nebenwand (120) verläuft, die Einströmrichtung des zweiten Luftstroms (240) in den Mischbereich (360) längs bezüglich der Hauptoberfläche der ersten Nebenwand (120) verläuft, und eine Ausströmrichtung eines aus dem ersten und dem zweiten Luftstrom (240, 350) gemischten Luftstroms (370) aus dem Mischbereich (360) an einer Seitenkante der zweiten Nebenwand (130) vorbei und quer zu der Hauptoberfläche der zweiten Nebenwand (130) verläuft.

2. Klimagerät gemäß Anspruch 1, bei dem die Hauptwand (110) des Mischbereichs (360) auf beiden Seiten ihrer Haupterstreckungsebene von dem ersten und dem zweiten Luftstrom (240, 350) umströmbar ist.

3. Klimagerät gemäß einem der vorangegangenen Ansprüche, bei dem eine Seitenkante der ersten Nebenwand (120) und eine Seitenkante der zweiten Nebenwand (130) einen Überstand über die Haupterstreckungsebene der Hauptwand (110) aufweisen.

4. Klimagerät gemäß einem der vorangegangenen Ansprüche, bei dem sich die erste und die zweite Nebenwand (120, 130) jeweils über mindestens eine halbe Länge der Seitenkante der Hauptwand (110) erstrecken, an der sie angebracht sind.

5. Klimagerät gemäß einem der vorangegangenen Ansprüche, bei dem eine Breite (Rv) einer der Nebenwände (120, 130) höchstens ein Fünftel eines Abstands (T) zwischen der ersten und der zweiten Nebenwand (120, 130) beträgt.

6. Klimagerät gemäß einem der Ansprüche 1 bis 5, wobei die Hauptwände (110) der mindestens zwei Mischelemente (100) einander gegenüberliegend und voneinander beabstandet angeordnet sind, wobei die Haupterstreckungsebenen der Hauptwände (110) eine gemeinsame Ausrichtung aufweisen.

7. Klimagerät gemäß Anspruch 6, bei dem ein Abstand (Rh) zwischen gegenüberliegenden Seitenkanten der Nebenwände (120, 130) benachbarter Mischelemente (100) der mindestens zwei Mischelemente (100) höchstens das Fünffache einer Breite (Rv) einer Nebenwand (120, 130) beträgt.

8. Klimagerät gemäß einem der Ansprüche 1 bis 7, bei dem der Abstand (Rh) zwischen gegenüberliegenden Seitenkanten der Nebenwände (120, 130) der zwei Mischelemente (100) des Mischmoduls höchstens ein Drittel einer Abmessung (B) des Vermischungsraums in der Richtung dieses Abstands (Rh) beträgt.

## Claims

1. An air conditioner which comprises the following features:
a mixing space for two airflows (240, 350) intersecting in the mixing space;
a first inlet duct for a first air flow (350), which is arranged so as to lead into the mixing space on a first side;
a second inlet duct for a second air flow (240), which is arranged so as to lead into the mixing space on a bottom side adjoining the first side;
an outlet duct for a mixed air flow (370), which is arranged so as to lead out of the mixing space on a second side opposite the first side; and
a mixing module for two air flows (240, 350) intersecting in an air conditioner being provided, wherein the mixing module has at least two mixing elements (100), wherein the mixing module is arranged in the mixing space, wherein the first and the second air flow (240, 350) from the inlet ducts can be mixed in the mixing module and the mixed air flow (370) can be discharged into the outlet duct, wherein a mixing element (100) for two air flows intersecting in an air conditioner is formed, wherein the mixing element (100) comprises the following features:
a main wall (110) of a mixing region (360) for mixing a first air flow (350) and a second air flow (240) intersecting the first air flow (350), the main wall (110) being arranged such that in operation of the mixing element (100) an inflow direction of the first air flow (350) into the mixing region (360) and an inflow direction of the second air flow (240) into the mixing region (360) run longitudinally with respect to a main extension plane of the main wall (110); and
a first and a second auxiliary wall (120, 130) of the mixing region (360) which are in each case mounted with a main surface on opposite side edges of the main wall (110), the first and the second auxiliary wall (120, 130) being arranged such that in operation of the mixing element (100) the inflow direction of the first air flow (350) into the mixing region (360) runs past a side edge of the first auxiliary wall (120) and transversely with respect to the main surface of the first auxiliary wall (120), the inflow direction of the second air flow (240) into the mixing region (360) runs longitudinally with respect to the main surface of the first auxiliary wall (120), and an outflow direction of an air flow (370) mixed from the first and the second air flow (240, 350) out of the mixing region (360) runs past a side edge of the second auxiliary wall (130) and transversely with respect to the main surface of the second auxiliary wall (130).

2. The air conditioner as claimed in claim 1, wherein the first and the second air flow (240, 350) can flow around the main wall (110) of the mixing region (360) on both sides of its main extension plane.

3. The air conditioner as claimed in one of the preceding claims, wherein a side edge of the first auxiliary wall (120) and a side edge of the second auxiliary wall (130) have a projection beyond the main extension plane of the main wall (110).

4. The air conditioner as claimed in one of the preceding claims, wherein the first and the second auxiliary wall (120, 130) extend in each case over at least half a length of the side edge of the main wall (110) on which they are mounted.

5. The air conditioner as claimed in one of the preceding claims, wherein a width (Rv) of one of the auxiliary walls (120, 130) is at most a fifth of a spacing (T) between the first and the second auxiliary wall (120, 130).

6. The air conditioner as claimed in one of claims 1 to 5, wherein the main walls (110) of the at least two mixing elements (100) are arranged opposite and spaced apart from one another, the main extension planes of the main walls (110) having a common orientation.

7. The air conditioner as claimed in claim 6, wherein a spacing (Rh) between opposite side edges of the auxiliary walls (120, 130) of adjacent mixing elements (100) of the at least two mixing elements (100) is at most five times a width (Rv) of an auxiliary wall (120, 130).

8. The air conditioner as claimed in one of claims 1 to 7, wherein the spacing (Rh) between opposite side edges of the auxiliary walls (120, 130) of the two mixing elements (100) of the mixing module is at most a third of a dimension (B) of the mixing space in the direction of this spacing (Rh).

## Revendications

1. Appareil de climatisation qui présente des caractéristiques suivantes :
un espace de mélange pour deux flux d'air (240, 350) se croisant dans l'espace de mélange;
un premier conduit d'entrée pour un premier flux d'air (350), conduit d'entrée qui est disposé en débouchant dans l'espace de mélange, au niveau d'un premier côté ;
un deuxième conduit d'entrée pour un deuxième flux d'air (240), conduit d'entrée qui est disposé en débouchant dans l'espace de mélange, au niveau d'un côté du fond contigu au premier côté ;
un conduit de sortie pour un flux d'air mélangé (370), conduit de sortie qui est disposé en sortant de l'espace de mélange, au niveau d'un deuxième côté placé à l'opposé du premier côté ; et
il est prévu un module de mélange pour deux flux d'air (240, 350) se croisant dans un appareil de climatisation, où le module de mélange présente au moins deux éléments de mélange (100), où le module de mélange est disposé dans l'espace de mélange, où le premier et le deuxième flux d'air (240, 350) provenant des conduits d'entrée peuvent être mélangés dans le module de mélange, et le flux d'air mélangé (370) peut passer dans le conduit de sortie, où un élément de mélange (100) est conçu pour deux flux d'air se croisant dans un appareil de climatisation, où l'élément de mélange (100) présente des caractéristiques suivantes:
une paroi principale (110) d'une zone de mélange (360) servant au mélange d'un premier flux d'air (350) et d'un deuxième flux d'air (240) se croisant avec le premier flux d'air (350), où la paroi principale (110) est disposée de manière telle, qu'au cours du fonctionnement de l'élément de mélange (100), une direction d'écoulement du premier flux d'air (350) entrant dans la zone de mélange (360) et une direction d'écoulement du deuxième flux d'air (240) entrant dans la zone de mélange (360) s'étendent longitudinalement par rapport à un plan principal d'étendue de la paroi principale (110) ; et
une première et une deuxième paroi secondaire (120, 130) de la zone de mélange (360) qui sont fixées à chaque fois en ayant une surface principale sur des bords latéraux opposés de la paroi principale (110), où la première et la deuxième paroi secondaire (120, 130) sont disposées de manière telle, qu'au cours du fonctionnement de l'élément de mélange (100), la direction d'écoulement du premier flux d'air (350) entrant dans la zone de mélange (360) s'étende devant un bord latéral de la première paroi secondaire (120) et transversalement par rapport à la surface principale de la première paroi secondaire (120), que la direction d'écoulement du deuxième flux d'air (240) entrant dans la zone de mélange (360) s'étende longitudinalement par rapport à la surface principale de la première paroi secondaire (120), et de manière telle, qu'une direction d'écoulement d'un flux d'air mélangé (370) provenant du premier et du deuxième flux d'air (240, 350) et sortant de la zone de mélange (360) s'étende devant un bord latéral de la deuxième paroi secondaire (130) et transversalement par rapport à la surface principale de la deuxième paroi secondaire (130).

2. Appareil de climatisation selon la revendication 1, dans lequel la paroi principale (110) de la zone de mélange (360) peut être baignée, des deux côtés du plan principal d'étendue de ladite paroi principale, par le premier et le deuxième flux d'air (240, 350).

3. Appareil de climatisation selon l'une ou l'autre des revendications précédentes, dans lequel un bord latéral de la première paroi secondaire (120) et un bord latéral de la deuxième paroi secondaire (130) présentent une partie en porte-à-faux par rapport au plan principal d'étendue de la paroi principale (110).

4. Appareil de climatisation selon l'une quelconque des revendications précédentes, dans lequel la première et la deuxième paroi secondaire (120, 130) s'étendent à chaque fois sur au moins une demi-longueur du bord latéral de la paroi principale (110), bord latéral sur lequel sont fixées lesdites parois secondaires.

5. Appareil de climatisation selon l'une quelconque des revendications précédentes, dans lequel une largeur (Rv) de l'une des parois secondaires (120, 130) est égale au maximum à un cinquième d'une distance (T) comprise entre la première et la deuxième paroi secondaire (120, 130).

6. Appareil de climatisation selon l'une quelconque des revendications 1 à 5, où les parois principales (110) des éléments de mélange (100) au moins au nombre de deux sont disposées en se faisant face l'une l'autre et en étant espacées l'une de l'autre, où les plans principaux d'étendue des parois principales (110) présentent une orientation commune.

7. Appareil de climatisation selon la revendication 6, dans lequel une distance (Rh) comprise entre des bords latéraux opposés des parois secondaires (120, 130) d'éléments de mélange voisins (100) comptant au moins deux éléments de mélange (100) est égale au maximum au quintuple d'une largeur (Rv) d'une paroi secondaire (120, 130).

8. Appareil de climatisation selon l'une quelconque des revendications 1 à 7, dans lequel la distance (Rh) comprise entre des bords latéraux opposés des parois secondaires (120, 130) des deux éléments de mélange (100) du module de mélange est égale au maximum à un tiers d'une dimension (B) de l'espace de mélange, suivant la direction de cette distance (Rh).
